# EUROPÄISCHE PATENTSCHRIFT

(11) **EP 2 996 828 B1**
(45) Veröffentlichungstag und Bekanntmachung des Hinweises auf die Patenterteilung: **19.02.2020**
(21) Anmeldenummer: 14713851.5
(22) Anmeldetag: 31.03.2014
(51) Int. Cl.: B23B 31/113, B23D 51/10

(54) **WERKZEUGSPANNVORRICHTUNG**
TOOL CLAMPING DEVICE
DISPOSITIF DE SERRAGE D'OUTIL

(30) Priorität: 13.05.2013 DE 102013208691
(43) Veröffentlichungstag der Anmeldung: 23.03.2016
(73) Patentinhaber: Robert Bosch GmbH, 70442 Stuttgart (DE)
(72) Erfinder: LAETT, Michael, CH-4500 Solothurn (CH)
(86) Internationale Anmeldenummer: PCT/EP2014/056403
(87) Internationale Veröffentlichungsnummer: WO 2014/183916

(56) Entgegenhaltungen:
- EP-A1- 1 236 530
- EP-B1- 0 814 934
- US-A1- 2009 071 015
- US-B1- 6 295 736

## Beschreibung

### Stand der Technik

Aus der EP 0 814 934 B1, die eine Werkzeugspannvorrichtung gemäß dem Oberbegriff des Anspruchs 1 offenbart, ist bereits eine Werkzeugspannvorrichtung, insbesondere eine Sägewerkzeugspannvorrichtung, für eine tragbare Werkzeugmaschine bekannt. Die Werkzeugspannvorrichtung weist hierbei eine Spanneinheit zu einer Einspannung eines Bearbeitungswerkzeugs auf, die zumindest ein beweglich gelagertes Freigabeelement zumindest zu einer Überführung der Spanneinheit in eine Löseposition, zumindest ein Spannelement zu einer Erzeugung einer zumindest in einem mit der Spanneinheit verbundenen Zustand des Bearbeitungswerkzeugs auf das Bearbeitungswerkzeug wirkenden Einspannkraft und zumindest ein Bewegungsarretierelement zu einer Arretierung zumindest einer Bewegungsmöglichkeit des Freigabeelements in zumindest einem Zustand umfasst.

### Offenbarung der Erfindung

Die Erfindung betrifft eine Werkzeugspannvorrichtung mit den Merkmalen des Anspruchs 1.

Unter einer "Spanneinheit" soll hier insbesondere eine Einheit verstanden werden, die dazu vorgesehen ist, ein Bearbeitungswerkzeug zu einer Bearbeitung eines Werkstücks mittels einer formschlüssigen und/oder kraftschlüssigen Verbindung einzuspannen. Der Begriff "vorgesehen" soll insbesondere speziell ausgelegt und/oder speziell ausgestattet definieren. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Vorzugsweise ist die Spanneinheit dazu vorgesehen, das Bearbeitungswerkzeug in einem mit der Spanneinheit verbundenen Zustand entlang einer Arbeitsbewegungsachse eines Antriebskraftübertragungselements einer Antriebseinheit und/oder einer Getriebeeinheit der tragbaren Werkzeugmaschine einzuspannen. Eine Hauptkomponente einer mittels des Spannelements erzeugten Einspannkraft wirkt vorzugsweise entlang der Arbeitsbewegungsachse, insbesondere entlang einer Hubachse. Hierbei ist das Antriebskraftübertragungselement besonders bevorzugt als Hubstange ausgebildet. Somit ist die Werkzeugspannvorrichtung bzw. die Spanneinheit bevorzugt mit dem Antriebskraftübertragungselement, insbesondere der Hubstange, verbunden bzw. an dem Antriebskraftübertragungselement, insbesondere der Hubstange, angeordnet. Das Bearbeitungswerkzeug wird in einem mit der Spanneinheit verbundenen Zustand vorzugsweise mittels der Spanneinheit entlang einer Hubachse der Hubstange eingespannt. Es ist jedoch auch denkbar, dass die Spanneinheit dazu vorgesehen ist, das Bearbeitungswerkzeug in einem mit der Spanneinheit verbundenen Zustand entlang einer quer zur Hubachse verlaufenden Richtung einzuspannen.

Der Begriff "Freigabeelement" soll hier insbesondere ein Element definieren, das zumindest dazu vorgesehen ist, eine Einspannkraft zu einer Einspannung des Bearbeitungswerkzeugs in einem mit der Spanneinheit verbundenen Zustand zu lösen und/oder eine Bearbeitungswerkzeugaufnahmeausnehmung der Spanneinheit freizugeben. Das Freigabeelement kann als Freigabehülse ausgebildet sein, die mit einem Bedienelement der Spanneinheit wirkungsmäßig verbunden ist, oder direkt als Bedienelement der Spanneinheit ausgebildet sein, das direkt von einem Bediener betätigbar ist. Weitere, einem Fachmann als sinnvoll erscheinende Ausgestaltungen und/oder Anordnungen des Freigabeelements sind ebenfalls denkbar. Unter einer "Löseposition" soll hier insbesondere eine Position zumindest eines Elements der Spanneinheit verstanden werden, in der ein Bearbeitungswerkzeug von der Spanneinheit abnehmbar bzw. entnehmbar ist. In der Löseposition gibt vorzugsweise das Freigabeelement die Bearbeitungswerkzeugaufnahmeausnehmung frei, um eine Entnahme des Bearbeitungswerkzeugs aus der Bearbeitungswerkzeugaufnahmeausnehmung zu ermöglichen.

Das Bearbeitungswerkzeug wird vorzugsweise in einem mit der Spanneinheit verbundenen Zustand in einer Spannposition der Spanneinheit mit einer von dem Spannelement erzeugten, insbesondere aktiv erzeugten, Einspannkraft eingespannt. Hierbei wird das Bearbeitungswerkzeug bevorzugt mit einer Einspannkraft des Spannelements gegen eine Spannfläche der Spanneinheit gedrückt. Die Spannfläche der Spanneinheit ist vorzugsweise am Freigabeelement angeordnet. Es ist jedoch auch denkbar, dass die Spannfläche an einem anderen, einem Fachmann als sinnvoll erscheinendem Element der Spanneinheit angeordnet ist. Das Spannelement ist vorzugsweise als federelastisches Spannelement ausgebildet. Somit erzeugt das Spannelement die Einspannkraft besonders bevorzugt infolge einer federelastischen Verformung. Es ist jedoch auch denkbar, dass das Spannelement eine andere, einem Fachmann als sinnvoll erscheinenden Ausgestaltung aufweist, wie beispielsweise als elektronischer Aktor, als Hydraulikelement, als Pneumatikelement usw.

Das Bewegungsarretierelement ist vorzugsweise dazu vorgesehen, das Freigabeelement mittels einer formschlüssigen und/oder kraftschlüssigen Verbindung zwischen dem Bewegungsarretierelement und dem Freigabeelement gegen eine Bewegung zu arretieren. Es ist jedoch auch denkbar, dass das Bewegungsarretierelement dazu vorgesehen ist, das Freigabeelement mittels einer kontaktlosen Verbindung, wie beispielsweise mittels magnetischen Kräften, gegen eine Bewegung zu arretieren. Der Ausdruck "fest verbunden" soll hier insbesondere eine kraftschlüssige, eine formschlüssige und/oder eine stoffschlüssige Verbindung zwischen zumindest zwei Elementen definieren, die zu einer Übertragung von Kräften in zumindest zwei zueinander entgegengesetzte Richtungen vorgesehen ist. Somit ist das Bewegungsarretierelement bevorzugt fest am Spannelement fixiert. Mittels der erfindungsgemäßen Ausgestaltung der Werkzeugspannvorrichtung kann konstruktiv einfach eine stabile Arretierungsfunktion der Spanneinheit erreicht werden. Hierdurch kann vorteilhaft ein hoher Bedienkomfort ermöglicht werden. Ein Bediener kann vorteilhaft einhändig ein Bearbeitungswerkzeug mit der Spanneinheit verbinden. Zudem kann vorteilhaft eine kompakte Spanneinheit realisiert werden. Ferner kann die Spanneinheit vorteilhaft in einer Löseposition gehalten werden. Dies ermöglicht eine zeit- und bedienungsarme Verbindung des Bearbeitungswerkzeugs mit der Spanneinheit.

Des Weiteren wird vorgeschlagen, dass das Bewegungsarretierelement einteilig mit dem Spannelement ausgebildet ist. Unter "einteilig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Hierbei kann das Bewegungsarretierelement mittels einer Schweißverbindung, mittels einer Klebeverbindung usw. mit dem Spannelement fest verbunden sein oder aus einem gemeinsamen Bauteil bestehen. Mittels der erfindungsgemäßen Ausgestaltung können vorteilhaft Montageaufwand, Montagekosten und Bauraum eingespart werden. Somit kann vorteilhaft eine kompakte Werkzeugspannvorrichtung erreicht werden.

Erfindungsgemäß ist das Bewegungsarretierelement zumindest teilweise als Querfortsatz des Spannelements ausgebildet ist. Hierbei erstreckt sich das Bewegungsarretierelement vorzugsweise zumindest teilweise zumindest im Wesentlichen quer zu einer Haupterstreckungsrichtung des Spannelements. Besonders bevorzugt erstreckt sich das Bewegungsarretierelement zumindest in einem Teilbereich des Bewegungsarretierelements senkrecht zur Haupterstreckungsrichtung des Spannelements. Die Haupterstreckungsrichtung des Spannelements erstreckt sich vorzugsweise in einem an der Hubstange montierten Zustand der Spanneinheit zumindest im Wesentlichen parallel zur Hubachse der Hubstange. Unter "im Wesentlichen quer" soll hier insbesondere eine Ausrichtung einer Richtung und/oder einer Achse relativ zu einer Bezugsrichtung und/oder einer Bezugsachse verstanden werden, wobei die Ausrichtung der Richtung und/oder der Achse zumindest verschieden von einer zumindest im Wesentlichen parallelen Ausrichtung zur Bezugsrichtung und/oder zur Bezugsachse ist und insbesondere windschief oder senkrecht zur Bezugsrichtung und/oder zur Bezugsachse ist. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Mittels der erfindungsgemäßen Ausgestaltung kann eine konstruktiv einfache und zuverlässige Bewegungsarretierung des Freigabeelements in zumindest eine Richtung ermöglicht werden.

Zudem wird vorgeschlagen, dass das Freigabeelement zumindest ein in zumindest einem Zustand mit dem Bewegungsarretierelement zusammenwirkendes Anschlagelement aufweist. Das Anschlagelement ist vorzugsweise als Anschlagnocken ausgebildet. Es ist jedoch auch denkbar, dass das Anschlagelement eine andere, einem Fachmann als sinnvoll erscheinende Ausgestaltung aufweist, wie beispielsweise als Rastausnehmung, als Rastfortsatz, als beweglich gelagerter Anschlagbolzen usw. Mittels der erfindungsgemäßen Ausgestaltung kann vorteilhaft eine sichere formschlüssige Verbindung zwischen dem Anschlagelement und dem Bewegungsarretierelement zu einer Bewegungsarretierung in zumindest eine Richtung ermöglicht werden.

Des Weiteren wird vorgeschlagen, dass die Spanneinheit zumindest ein Zentrierelement umfasst, das dazu vorgesehen ist, das Bewegungsarretierelement zu führen. Hierbei ist das Zentrierelement vorzugsweise dazu vorgesehen, das Bewegungsarretierelement axial beweglich und unverdrehbar aufzunehmen. Somit wird das Bewegungsarretierelement bevorzugt mittels des Zentrierelements verdrehsicher geführt. Mittels der erfindungsgemäßen Ausgestaltung kann vorteilhaft eine zuverlässige Funktion des Bewegungsarretierelements gewährleistet werden.

Vorteilhafterweise weist das Zentrierelement zumindest eine Führungsausnehmung auf, durch die sich das Bewegungsarretierelement zumindest teilweise hindurch erstreckt. Die Führungsausnehmung ist bevorzugt als Langloch ausgebildet. Hierbei erstreckt sich die Führungsausnehmung in einem an der Hubstange montierten Zustand vorzugsweise zumindest im Wesentlichen parallel zur Hubachse der Hubstange. Somit kann vorteilhaft eine Begrenzung einer möglichen Bewegungsstrecke des Bewegungsarretierelements erreicht werden. Zudem kann vorteilhaft eine Sicherung des Bewegungsarretierelements am Zentrierelement erreicht werden.

Ferner wird vorgeschlagen, dass das Zentrierelement eine Bearbeitungswerkzeugaufnahmeausnehmung aufweist, die angrenzend an die Führungsausnehmung des Zentrierelements zu einer Führung des Bewegungsarretierelements angeordnet ist. Vorzugsweise ist die Bearbeitungswerkzeugaufnahmeausnehmung korrespondierend zu einem Verbindungsbereich des Bearbeitungswerkzeugs ausgebildet. Das Bearbeitungswerkzeug ist bevorzugt als Stichsägeblatt ausgebildet. Es ist jedoch auch denkbar, dass das Bearbeitungswerkzeug eine andere, einem Fachmann als sinnvoll erscheinende Ausgestaltung aufweist, wie beispielsweise eine Ausgestaltung als Säbelsägeblatt usw. Mittels der erfindungsgemäßen Ausgestaltung kann vorteilhaft eine kompakte Spanneinheit realisiert werden.

Zudem wird vorgeschlagen, dass das Freigabeelement drehbar gelagert ist. Besonders bevorzugt ist das Freigabeelement als Freigabehülse ausgebildet. Hierbei umfasst die Freigabehülse vorzugsweise einen Betätigungsfortsatz, mittels dessen eine Einwirkung einer Betätigungskraft eines Bedieners auf die Freigabehülse erreichbar ist. Der Betätigungsfortsatz verläuft zumindest im Wesentlichen quer zu einer Bewegungsachse des Freigabeelements, insbesondere der Freigabehülse. Hierbei verläuft die Bewegungsachse des Freigabeelements bevorzugt zumindest im Wesentlichen parallel zur Hubachse der Hubstange, insbesondere in einem an der Hubstange montierten Zustand der Spanneinheit. Vorzugsweise verläuft die Bewegungsachse des Freigabeelements zudem zumindest im Wesentlichen parallel zu einer Einspannkrafthauptwirkungsrichtung des Spannelements. Insbesondere ist das Freigabeelement entlang eines Winkelbereichs größer als 5°, bevorzugt größer als 10° und besonders bevorzugt größer als 15° drehbar um die Bewegungsachse des Freigabeelements gelagert. Mittels der erfindungsgemäßen Ausgestaltung kann vorteilhaft eine komfortabel zu bedienende Lösefunktion der Spanneinheit realisiert werden.

Erfindungsgemäß ist das Spannelement als Federelement ausgebildet ist. Unter einem "Federelement" soll insbesondere ein makroskopisches Element verstanden werden, das zumindest eine Erstreckung aufweist, die in einem normalen Betriebszustand um zumindest 10%, insbesondere um wenigstens 20%, vorzugsweise um mindestens 30% und besonders vorteilhaft um zumindest 50% elastisch veränderbar ist, und das insbesondere eine von einer Veränderung der Erstreckung abhängige und vorzugsweise zu der Veränderung proportionale Gegenkraft erzeugt, die der Veränderung entgegen wirkt. Unter einer "Erstreckung" eines Elements soll insbesondere ein maximaler Abstand zweier Punkte einer senkrechten Projektion des Elements auf eine Ebene verstanden werden. Unter einem "makroskopischen Element" soll insbesondere ein Element mit einer Erstreckung von zumindest 1 mm, insbesondere von wenigstens 5 mm und vorzugsweise von mindestens 10 mm verstanden werden. Bevorzugt ist das Spannelement als Druckfeder ausgebildet. Hierbei ist das Spannelement vorzugsweise als Schraubenfeder ausgebildet. Es ist jedoch auch denkbar, dass das Spannelement eine andere Ausgestaltung aufweist, wie beispielsweise eine Ausgestaltung als Zugfeder, als Torsionsfeder, als Blattfeder, als Evolutfeder, als Tellerfeder usw. Mittels der erfindungsgemäßen Ausgestaltung kann vorteilhaft konstruktiv einfach eine Einspannkraft erzeugt werden. Zudem kann vorteilhaft eine kompakte Spanneinheit realisiert werden.

Zudem geht die Erfindung aus von dem Spannelement der Spanneinheit der erfindungsgemäßen Werkzeugspannvorrichtung. Hierbei weist das Spannelement bevorzugt einen Spannkrafterzeugungsbereich auf, der als Schraubenfederbereich ausgebildet ist. Es ist jedoch auch denkbar, dass der Spannkrafterzeugungsbereich eine andere, einem Fachmann als sinnvoll erscheinende Ausgestaltung aufweist, wie beispielsweise eine Ausgestaltung als Blattfederbereich, als Schenkelfederbereich usw. Ferner umfasst das Spannelement vorzugsweise einen Arretierbereich, der das fest mit dem Spannelement verbundene Bewegungsarretierelement bildet. Der Arretierbereich ist bevorzugt einteilig mit dem Spannkrafterzeugungsbereich ausgebildet. Es kann vorteilhaft mittels eines erfindungsgemäßen Spannelements eine kompakte Spanneinheit erreicht werden, die einen hohen Bedienkomfort aufweist.

Ferner geht die Erfindung aus von einer tragbaren Werkzeugmaschine mit einer erfindungsgemäßen Werkzeugspannvorrichtung. Unter einer "tragbaren Werkzeugmaschine" soll hier insbesondere eine Werkzeugmaschine zu einer Bearbeitung von Werkstücken verstanden werden, die von einem Bediener transportmaschinenlos transportiert werden kann. Die tragbare Werkzeugmaschine weist insbesondere eine Masse auf, die kleiner ist als 40 kg, bevorzugt kleiner ist als 10 kg und besonders bevorzugt kleiner ist als 5 kg. Bevorzugt ist die tragbare Werkzeugmaschine als Stichsäge ausgebildet. Es ist jedoch auch denkbar, dass die tragbare Werkzeugmaschine eine andere, einem Fachmann als sinnvoll erscheinende Ausgestaltung aufweist, wie beispielsweis eine Ausgestaltung als Säbelsäge usw. Mittels der erfindungsgemäßen Ausgestaltung kann vorteilhaft ein hoher Bedienkomfort für ein Bediener der tragbaren Werkzeugmaschine zur Verfügung gestellt werden. Es kann vorteilhaft ein Halten der Spanneinheit in einer Löseposition, in der die Bearbeitungswerkzeugaufnahmeausnehmung freigegeben ist, ermöglicht werden, um ein komfortables Einführen eines Bearbeitungswerkzeugs zu ermöglichen.

Die erfindungsgemäße Werkzeugspannvorrichtung und/oder die erfindungsgemäße tragbare Werkzeugmaschine soll/sollen hierbei nicht auf die oben beschriebene Anwendung und Ausführungsform beschränkt sein. Insbesondere können/kann die erfindungsgemäße Werkzeugspannvorrichtung und/oder die erfindungsgemäße tragbare Werkzeugmaschine zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße tragbare Werkzeugmaschine mit einer erfindungsgemäßen Werkzeugspannvorrichtung in einer schematischen Darstellung,
- Fig. 2: eine perspektivische Ansicht der erfindungsgemäßen Werkzeugspannvorrichtung in einer Löseposition einer Spanneinheit der erfindungsgemäßen Werkzeugspannvorrichtung in einer schematischen Darstellung,
- Fig. 3: eine Draufsicht der erfindungsgemäßen Werkzeugspannvorrichtung in einer Löseposition der Spanneinheit in einer schematischen Darstellung,
- Fig. 4: eine Schnittansicht der erfindungsgemäßen Werkzeugspannvorrichtung in einer Löseposition der Spanneinheit in einer schematischen Darstellung,
- Fig. 5: eine Draufsicht der erfindungsgemäßen Werkzeugspannvorrichtung in einer Spannposition der Spanneinheit in einer schematischen Darstellung,
- Fig. 6: eine Schnittansicht der erfindungsgemäßen Werkzeugspannvorrichtung in einer Spannposition einer Spanneinheit in einer schematischen Darstellung,
- Fig. 7: eine weitere Schnittansicht der erfindungsgemäßen Werkzeugspannvorrichtung in einer Spannposition der Spanneinheit in einer schematischen Darstellung,
- Fig. 8: eine Detailansicht eines Zentrierelements der Spanneinheit in einer schematischen Darstellung,
- Fig. 9: eine Schnittansicht des Zentrierelements in einer schematischen Darstellung und
- Fig. 10: eine Detailansicht eines Spannelements der Spanneinheit in einer schematischen Darstellung.

### Beschreibung des Ausführungsbeispiels

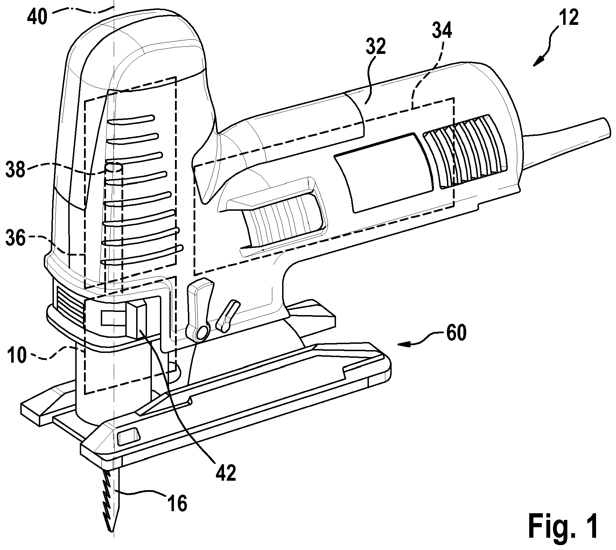

Figur 1 zeigt eine als Stichsäge ausgebildete tragbare Werkzeugmaschine 12 mit einer Werkzeugspannvorrichtung 10. Die tragbare Werkzeugmaschine 12 weist ein Werkzeugmaschinengehäuse 32 auf. Das Werkzeugmaschinengehäuse 32 umschließt eine Antriebseinheit 34 der tragbaren Werkzeugmaschine 12 und eine Getriebeeinheit 36 der tragbaren Werkzeugmaschine 12. Die Antriebseinheit 34 und die Getriebeeinheit 36 sind dazu vorgesehen, ein in der Werkzeugspannvorrichtung 10 eingespanntes Bearbeitungswerkzeug 16 oszillierend anzutreiben. Hierbei wird das Bearbeitungswerkzeug 16 im Wesentlichen senkrecht zu einer Bearbeitungsbewegungsrichtung der tragbaren Werkzeugmaschine 12 oszillierend angetrieben. Das Bearbeitungswerkzeug 16 ist als Stichsägeblatt ausgebildet. Es ist jedoch auch denkbar, dass das Bearbeitungswerkzeug 16 von einem anderen, einem Fachmann als sinnvoll erscheinendem Bearbeitungswerkzeug gebildet wird.

Die Getriebeeinheit 36 weist zu einem Antrieb des mittels der Spanneinheit 14 festgespannten Werkzeugs ein als Hubstange 38 ausgebildetes Antriebskraftübertragungselement auf. Die Werkzeugspannvorrichtung 10 ist hierbei auf eine, einem Fachmann bereits bekannte Art und Weise an der Hubstange 38 angeordnet bzw. antriebstechnisch mit der Hubstange 38 verbunden. Die Werkzeugspannvorrichtung 10 ist somit dazu vorgesehen, das Bearbeitungswerkzeug 16 zu einem oszillierenden Antrieb mit der Hubstange 38 zu koppeln. Das Bearbeitungswerkzeug 16 führt somit eine Hubbewegung entlang einer Hubachse 40 der Hubstange 38 aus. Zudem sind/ist die Antriebseinheit 34 und/oder die Getriebeeinheit 36 dazu vorgesehen, in zumindest einem Betriebsmodus der tragbaren Werkzeugmaschine 12 das Bearbeitungswerkzeug 16 pendelnd entlang einer quer zur Hubachse 40 verlaufenden Richtung auf eine, einem Fachmann bereits bekannte Art und Weise anzutreiben. Somit führt das Bearbeitungswerkzeug 16 in einem Betriebszustand eine Pendelhubbewegung aus. Zu einer Auflage auf ein Werkstück weist die tragbare Werkzeugmaschine 12 zudem eine, einem Fachmann bereits bekannte Auflageeinheit 60 auf. Die Auflageeinheit 60 kann hierbei relativ zum Werkzeugmaschinengehäuse 32 beweglich am Werkzeugmaschinengehäuse 32 gelagert sein oder positionsunveränderbar am Werkzeugmaschinengehäuse 32 angeordnet sein.

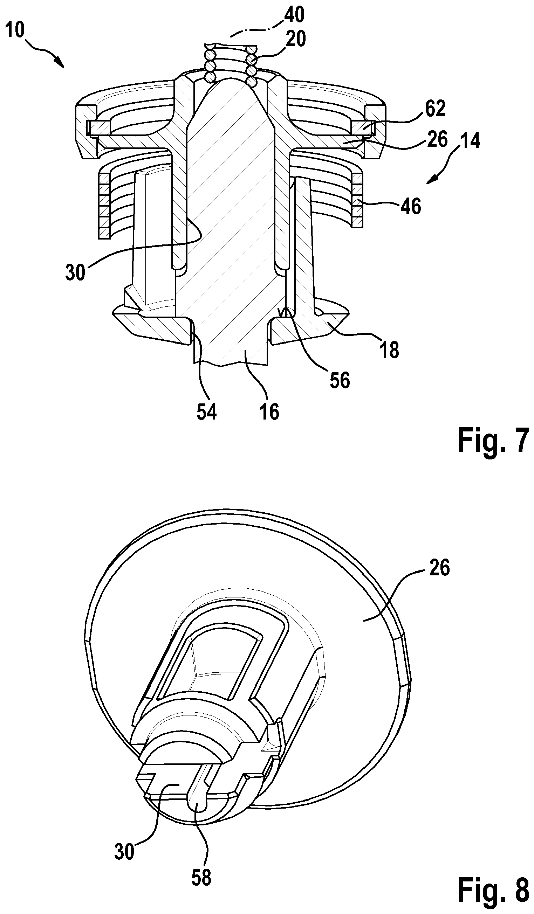

Die Werkzeugspannvorrichtung 10 ist als Sägewerkzeugspannvorrichtung ausgebildet. Hierbei umfasst die Werkzeugspannvorrichtung 10 der tragbaren Werkzeugmaschine 12 zumindest eine Spanneinheit 14 zu einer Einspannung des Bearbeitungswerkzeugs 16. Die Spanneinheit 14 weist zumindest ein beweglich gelagertes Freigabeelement 18 zumindest zu einer Überführung der Spanneinheit 14 in eine Löseposition und zumindest ein Spannelement 20 zu einer Erzeugung einer zumindest in einem mit der Spanneinheit 14 verbundenen Zustand des Bearbeitungswerkzeugs 16 auf das Bearbeitungswerkzeug 16 wirkenden Einspannkraft auf. Das Spannelement 20 ist als Federelement ausgebildet. Hierbei ist das Spannelement 20 als Druckfeder ausgebildet. Somit ist das Spannelement 20 dazu vorgesehen, das Bearbeitungswerkzeug 16 zumindest in einem in der Spanneinheit 14 angeordneten Zustand des Bearbeitungswerkzeugs 16 in einer Spannposition der Spanneinheit 14 mit einer Federkraft in Richtung einer Spannfläche 56 der Spanneinheit 14 zu beaufschlagen (Figur 7). Die Spannfläche 56 der Spanneinheit 14 ist am Freigabeelement 18 angeordnet. Hierbei wird die Spannfläche 56 der Spanneinheit 14 von einer eine Einführausnehmung 54 des Freigabeelements 18 begrenzenden Fläche des Freigabeelements 18 gebildet.

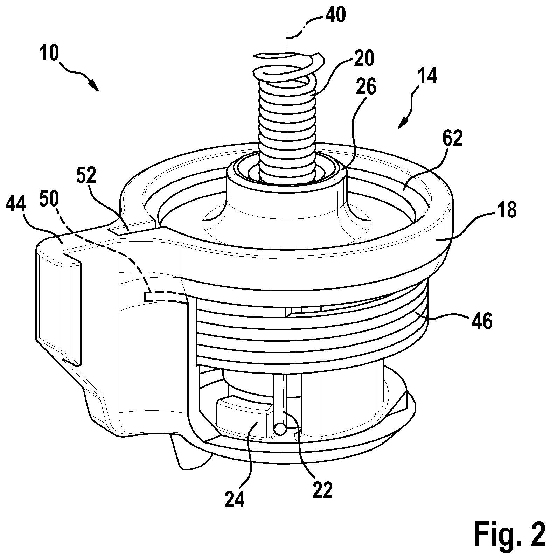

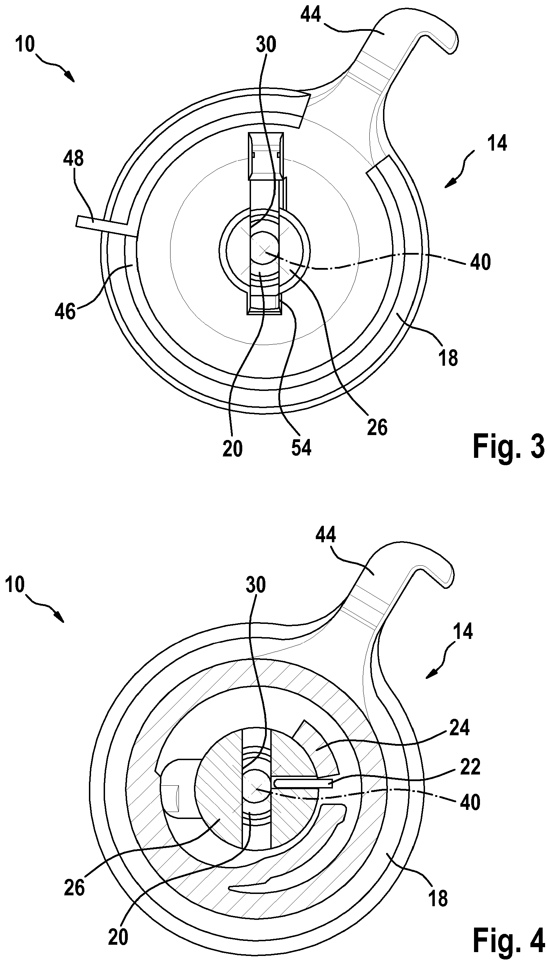

Ferner umfasst die Spanneinheit 14 zumindest ein Bewegungsarretierelement 22 zu einer Arretierung zumindest einer Bewegungsmöglichkeit des Freigabeelements 18 in zumindest einem Zustand (Figuren 2 und 4). Das Freigabeelement 18 ist drehbar gelagert. Hierbei ist das Freigabeelement 18 im montierten Zustand drehbar im Werkzeugmaschinengehäuse 32 gelagert. Das Freigabeelement 18 ist als Freigabehülse ausgebildet, die drehbar um die Hubachse 40 gelagert ist. Somit ist das Bewegungsarretierelement 22 dazu vorgesehen, das Freigabeelement 18 in einem Zustand in der Löseposition, in der das Bearbeitungswerkzeug 16 aus der Spanneinheit 14 entnommen ist, gegen eine Drehbewegung zu arretieren. Hierdurch wird die Spanneinheit 14 in einer offenen Stellung gehalten, um ein Einführen des Bearbeitungswerkzeugs 16 auf eine, einem Fachmann bereits bekannte Art und Weise zu ermöglichen. Zu einer Arretierung des Freigabeelements 18 weist das Freigabeelement 18 zumindest ein in zumindest einem Zustand mit dem Bewegungsarretierelement 22 zusammenwirkendes Anschlagelement 24 auf (Figuren 2, 4 und 6). Das Anschlagelement 24 ist als Nocken ausgebildet. Der Nocken erstreckt sich teilweise zumindest im Wesentlichen parallel zur Hubachse 40. Hierbei erstreckt sich der Nocken ausgehend von dem Freigabeelement 18 in Richtung des Werkzeugmaschinengehäuses 32. Zudem ist das Anschlagelement 24 einteilig mit dem Freigabeelement 18 ausgebildet. Es ist jedoch auch denkbar, dass das Anschlagelement 24 eine andere, einem Fachmann als sinnvoll erscheinende Ausgestaltung und/oder Anordnung aufweist.

Das Freigabeelement 18 ist zu einer Bewegung ausgehend von einer Spannstellung des Freigabeelements 18 in einer Spannposition der Spanneinheit 14 in eine Freigabestellung des Freigabeelements 18 in einer Löseposition der Spanneinheit 14 mit einem Bedienelement 42 der Spanneinheit 14 verbunden. Das Bedienelement 42 ist schwenkbar um eine zumindest im Wesentlichen parallel zur Hubachse 40 verlaufende Schwenkachse des Bedienelements 42 am Werkzeugmaschinengehäuse 32 gelagert. Zu einer Verbindung bzw. zu einer Bedienkraftübertragung zwischen dem Freigabeelement 18 und dem Bedienelement 42 weist das Freigabeelement 18 zumindest einen Betätigungsfortsatz 44 auf (Figur 2). Der Betätigungsfortsatz 44 erstreckt sich zumindest im Wesentlichen quer zu einer Bewegungsachse des Freigabeelements 18. Die Bewegungsachse des Freigabeelements 18 verläuft zumindest im Wesentlichen parallel zur Hubachse 40 bzw. wird von der Hubachse 40 gebildet. Der Betätigungsfortsatz 44 wirkt zu einer Bedienkraftübertragung mit einem Betätigungsbereich (hier nicht näher dargestellt) des Bedienelements 42 auf eine, einem Fachmann bereits bekannte Art und Weise zusammen. Der Betätigungsbereich des Bedienelements 42 kann hierbei als Ausnehmung ausgebildet sein, in die der Betätigungsfortsatz 44 eingreift oder als Fortsatz, der den Betätigungsfortsatz 44 hintergreift und somit bei einer Schwenkbewegung des Bedienelements 42 eine Bedienkraftübertragung ermöglicht.

Des Weiteren weist die Spanneinheit 14 ein Freigabefederelement 46 auf, das das Freigabeelement 18 mit einer Federkraft in Richtung einer Spannstellung des Freigabeelements 18 beaufschlagt (in Figuren 2, 3, 5 und 7 dargestellt). Das Freigabefederelement 46 ist als Drehfeder bzw. als Schenkelfeder ausgebildet. Somit stützt sich das Freigabefederelement 46 zu einer Einwirkung einer Federkraft auf das Freigabeelement 18 mit einem Ende 48 bzw. Schenkel (Figur 3) an der Hubstange 38 oder am Werkzeugmaschinengehäuse 32 ab und mit einem weiteren Ende 50 bzw. Schenkel (Figur 2) stützt sich das Freigabefederelement 46 am Freigabeelement 18 ab. Es ist jedoch auch denkbar, dass das Freigabefederelement 46 eine andere, einem Fachmann als sinnvoll erscheinende Ausgestaltung aufweist, wie beispielsweise eine Ausgestaltung als Zugfeder oder als Druckfeder usw. Zu einer Aufnahme des weiteren Endes 50 bzw. des weiteren Schenkels des Freigabefederelements 46 weist das Freigabeelement 18 eine Federaufnahme 52 auf (Figur 2). Die Federaufnahme 52 weist eine nutförmige Ausgestaltung auf, die sich zumindest im Wesentlichen parallel zur Bewegungsachse des Freigabeelements 18 erstreckt.

Figuren 2 bis 4 zeigen die Spanneinheit 14 in einer Löseposition, in der das Freigabeelement 18 mittels des Bewegungsarretierelements 22 in einer Freigabestellung arretiert bzw. gehalten wird. Hierbei liegt das Bewegungsarretierelement 22, betrachtet entlang einer in einer sich zumindest im Wesentlichen senkrecht zur Hubachse 40 erstreckenden Ebene verlaufenden Umfangsrichtung, am Anschlagelement 24 an. Somit wird das Freigabeelement 18 mittels einer formschlüssigen Verbindung zwischen dem Bewegungsarretierelement 22 und dem Anschlagelement 24 gegen eine Drehbewegung infolge einer auf das Freigabeelement 18 einwirkenden Federkraft des Freigabefederelements 46 arretiert. Das Bewegungsarretierelement 22 ist fest mit dem Spannelement 20 verbunden. Hierbei ist das Bewegungsarretierelement 22 einteilig mit dem Spannelement 20 ausgebildet. Somit ist das Bewegungsarretierelement 22 an das als Federelement ausgebildete Spannelement 20 angeformt. Das Bewegungsarretierelement 22 ist zumindest teilweise als Querfortsatz des Spannelements 20 ausgebildet. Hierbei erstreckt sich das Bewegungsarretierelement 22 zumindest teilweise zumindest im Wesentlichen quer zu einer Hauptverformungsachse des Spannelements 20. Somit wird das Bewegungsarretierelement 22 als Schenkel des als Federelement ausgebildeten Spannelements 20 gebildet. Die Hauptverformungsachse des Spannelements 20 verläuft zumindest im Wesentlichen parallel zur Hubachse 40 bzw. wird von der Hubachse 40 gebildet.

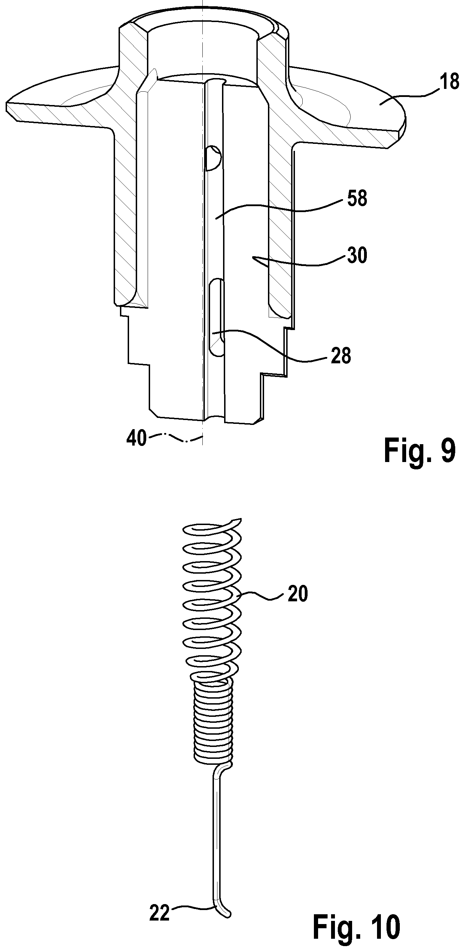

Des Weiteren umfasst die Spanneinheit 14 zumindest ein Zentrierelement 26, das dazu vorgesehen ist, das Bewegungsarretierelement 22 zu führen (Figuren 4, 6, 8 und 9). Hierzu weist das Zentrierelement 26 zumindest eine Führungsausnehmung 28 auf, durch die sich das Bewegungsarretierelement 22 zumindest teilweise hindurch erstreckt (Figuren 4, 6 und 9). Ferner ist die Führungsausnehmung 28 dazu vorgesehen, das Bewegungsarretierelement 22 verdrehsicher relativ zum Zentrierelement 26 im Zentrierelement 26 anzuordnen. Die Führungsausnehmung 28 ist als Langloch ausgebildet. Hierbei weist die Führungsausnehmung 28 eine Haupterstreckungsrichtung auf, die zumindest im Wesentlichen parallel zur Hubachse 40 verläuft. Somit ist die Führungsausnehmung 28 zusätzlich zur Führung des Bewegungsarretierelements 22 zu einer Bewegungsstreckenbegrenzung des Bewegungsarretierelements 22 entlang einer zumindest im Wesentlichen parallel zur Hubachse 40 verlaufenden Richtung vorgesehen. Zudem umfasst das Zentrierelement 26 zumindest eine Längsvertiefung 58, die zu einer Aufnahme eines Längsschenkels des Bewegungsarretierelements 22 vorgesehen ist. Der Längsschenkel des Bewegungsarretierelements 22 erstreckt sich zumindest im Wesentlichen parallel zur Hubachse 40 bzw. zur Hauptverformungsachse des Spannelements 20 (Figur 10). Ferner verbindet der Längsschenkel des Bewegungsarretierelements 22 einen sich in einem montierten Zustand des Bewegungsarretierelements 22 durch die Führungsausnehmung 28 hindurch erstreckenden Querschenkel des Bewegungsarretierelements 22 mit dem Spannelement 20 bzw. mit einem letzten Windungsabschnitt des Spannelements 20.

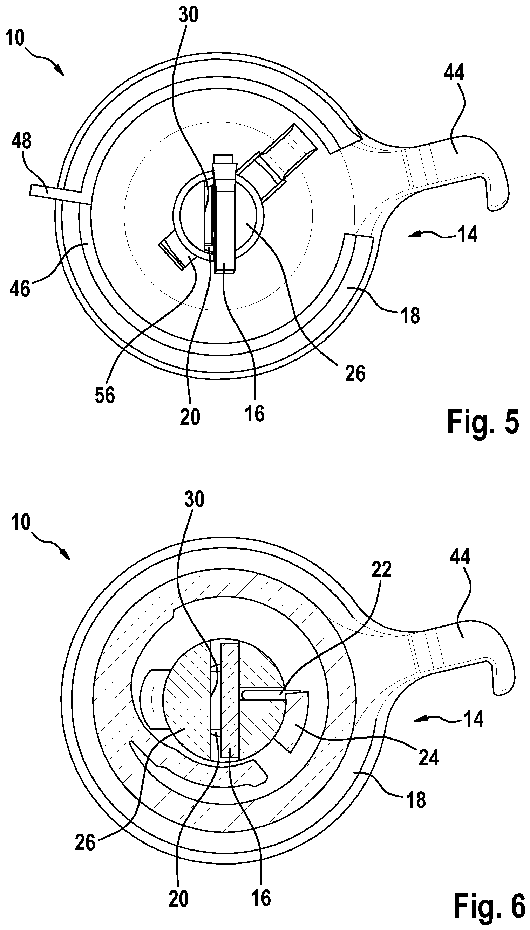

Ferner weist das Zentrierelement 26 eine Bearbeitungswerkzeugaufnahmeausnehmung 30 auf, die angrenzend an die Führungsausnehmung 28 des Zentrierelements 26 zu einer Führung des Bewegungsarretierelements 22 angeordnet ist (Figuren 5 bis 7). Die Bearbeitungswerkzeugaufnahmeausnehmung 30 ist zu einer Aufnahme des Bearbeitungswerkzeugs 16 vorgesehen. Hierzu weist die Bearbeitungswerkzeugaufnahmeausnehmung 30 eine schlitzförmige Ausgestaltung auf, in die das Bearbeitungswerkzeug 16 in einer Freigabestellung des Freigabeelements 18 in einer Löseposition der Spanneinheit 14 einführbar ist. Das Zentrierelement 26 wird entlang der Umfangsrichtung von dem Freigabeelement 18 umgeben. Somit ist das Zentrierelement 26 innerhalb des Freigabeelements 18 angeordnet. Zu einer Sicherung des Zentrierelements 26 am Freigabeelement 18 weist die Spanneinheit 14 ein Sicherungselement 62 auf. Das Sicherungselement 62 ist als Sicherungsring ausgebildet, der in einer Nut des Freigabeelements 18 angeordnet ist (Figur 7).

Zu einem Festspannen des Bearbeitungswerkzeugs 16 an der Spanneinheit 14 wird das Bearbeitungswerkzeug 16 in einer Löseposition der Spanneinheit 14, in der das Freigabeelement 18 mittels des Bewegungsarretierelements 22 in einer Freigabestellung gehalten wird, in die Bearbeitungswerkzeugaufnahmeausnehmung 30 eingeführt. Infolge des Einführens des Bearbeitungswerkzeugs 16 in die Bearbeitungswerkzeugaufnahmeausnehmung 30 wird das Spannelement 20 entgegen einer Federkraft des Spannelements 20 bewegt. Das Bewegungsarretierelement 22 wird hierdurch außer Eingriff mit dem Anschlagelement 24 gebracht. Sobald das Bewegungsarretierelement 22 eine Bewegungsmöglichkeit des Freigabeelements 18 freigibt, bewegt sich die das Freigabeelement 18 infolge einer Federkraft des Freigabefederelements 46 in eine Spannstellung. In einer Spannstellung überdeckt das Freigabeelement 18 zumindest teilweise eine Einführöffnung der Bearbeitungswerkzeugaufnahmeausnehmung 30. Das Spannelement 20 übt eine Einspannkraft auf das in die Spanneinheit 14 eingeführte Bearbeitungswerkzeug 16 aus. Hierbei wird das Bearbeitungswerkzeug 16 in einer Spannposition der Spanneinheit 14 unter einer Einwirkung der durch eine Federkraft des Spannelements 20 erzeugten Einspannkraft auf die Spannfläche 56 gedrückt. Die Spanneinheit 14 befindet sich somit in einer Spannposition.

Zu einer Entnahme bzw. zu einem Wechsel des Bearbeitungswerkzeugs 16 wird das Bedienelement 42 bewegt, das das Freigabeelement 18 entgegen einer Federkraft des Freigabefederelements 46 bewegt, wodurch die Bearbeitungswerkzeugaufnahmeausnehmung 30 wieder freigegeben wird. Infolge einer auf das Bearbeitungswerkzeug 16 wirkenden Spannkraft wird das Bearbeitungswerkzeug 16 aus der Bearbeitungswerkzeugaufnahmeausnehmung 30 heraus bewegt bzw. ausgeworfen, sobald die Bearbeitungswerkzeugaufnahmeausnehmung 30 freigegeben wird. Zudem wird das Bewegungsarretierelement 22 in Richtung des Anschlagelements 24 bewegt, bis das Bewegungsarretierelement 22 das Anschlagelement 24, betrachtet entlang der Umfangsrichtung, hintergreift bzw. bis das Bewegungsarretierelement 22 an der Spannfläche 56 anliegt. Somit wird das Freigabeelement 18 nach einer Entnahme bzw. nach einem Auswurf des Bearbeitungswerkzeugs 16 aus der Bearbeitungswerkzeugaufnahmeausnehmung 30 wieder mittels des Bewegungsarretierelements 22 gegen eine Bewegung infolge einer Federkraft des Freigabefederelements 46 in einer Freigabestellung arretiert.

## Patentansprüche

1. Werkzeugspannvorrichtung, insbesondere Sägewerkzeugspannvorrichtung, für eine tragbare Werkzeugmaschine, mit zumindest einer Spanneinheit (14) zu einer Einspannung eines Bearbeitungswerkzeugs (16), die zumindest ein beweglich gelagertes Freigabeelement (18) zumindest zu einer Überführung der Spanneinheit (14) in eine Löseposition umfasst, wobei die Spanneinheit (14) ein Freigabefederelement (46) aufweist, das das Freigabeelement (18) mit einer Federkraft in Richtung einer Spannstellung des Freigabeelements (18) beaufschlagt, wobei das Freigabefederelement (46) als Drehfeder bzw. als Schenkelfeder ausgebildet ist, ferner aufweisend zumindest ein Spannelement (20) zu einer Erzeugung einer zumindest in einem mit der Spanneinheit (14) verbundenen Zustand des Bearbeitungswerkzeugs (16) auf das Bearbeitungswerkzeug (16) wirkenden Einspannkraft und zumindest ein Bewegungsarretierelement (22) zu einer Arretierung zumindest einer Bewegungsmöglichkeit des Freigabeelements (18) in zumindest einem Zustand, **dadurch gekennzeichnet, dass** das Spannelement (20) als Federelement ausgebildet ist und dass das Bewegungsarretierelement (22) zumindest teilweise als Querfortsatz des Spannelements (20) ausgebildet ist.

2. Werkzeugspannvorrichtung nach Anspruch 1, **dadurch gekennzeichnet, dass** das Bewegungsarretierelement (22) einteilig mit dem Spannelement (20) ausgebildet ist.

3. Werkzeugspannvorrichtung nach einem der vorhergehenden Ansprüche, **dadurch gekennzeichnet, dass** das Freigabeelement (18) zumindest ein in zumindest einem Zustand mit dem Bewegungsarretierelement (22) zusammenwirkendes Anschlagelement (24) aufweist.

4. Werkzeugspannvorrichtung nach einem der vorhergehenden Ansprüche, **dadurch gekennzeichnet, dass** die Spanneinheit (14) zumindest ein Zentrierelement (26) umfasst, das dazu vorgesehen ist, das Bewegungsarretierelement (22) zu führen.

5. Werkzeugspannvorrichtung nach Anspruch 4, **dadurch gekennzeichnet, dass** das Zentrierelement (26) zumindest eine Führungsausnehmung (28) aufweist, durch die sich das Bewegungsarretierelement (22) zumindest teilweise hindurch erstreckt.

6. Werkzeugspannvorrichtung zumindest nach Anspruch 4, **dadurch gekennzeichnet, dass** das Zentrierelement (26) eine Bearbeitungswerkzeugaufnahmeausnehmung (30) aufweist, die angrenzend an eine Führungsausnehmung (28) des Zentrierelements (26) zu einer Führung des Bewegungsarretierelements (22) angeordnet ist.

7. Werkzeugspannvorrichtung nach einem der vorhergehenden Ansprüche **dadurch gekennzeichnet, dass** das Freigabeelement (18) drehbar gelagert ist.

8. Tragbare Werkzeugmaschine mit einer Werkzeugspannvorrichtung nach einem der Ansprüche 1 bis 7.

## Claims

1. Tool clamping device, in particular a saw-tool clamping device, for a portable power tool, having at least one clamping unit (14) for clamping-in a machining tool (16), which comprises at least one movably mounted release element (18), at least for transferring the clamping unit (14) into a release position, wherein the clamping unit (14) has a release spring element (46), which applies a spring force to the release element (18) in the direction of a clamping position of the release element (18), wherein the release spring element (46) is realized as a torsion spring, or as a leg spring, further having at least one clamping element (20), for generating a clamping-in force acting on the machining tool (16), at least when the machining tool (16) is in a state in which it is connected to the clamping unit (14), and at least one movement-arresting element (22), for arresting at least one movement capability of the release element (18) in at least one state, **characterized in that** the clamping element (20) is realized as a spring element and **in that** the movement-arresting element (22) is realized, at least partially, as a transverse extension of the clamping element (20).

2. Tool clamping device according to Claim 1, **characterized in that** the movement-arresting element (22) is realized so as to be integral with the clamping element (20).

3. Tool clamping device according to either of the preceding claims, **characterized in that** the release element (18) has at least one stop element (24) that, in at least one state, acts in combination with the movement-arresting element (22).

4. Tool clamping device according to any one of the preceding claims, **characterized in that** the clamping unit (14) comprises at least one centring element (26), which is provided to guide the movement-arresting element (22).

5. Tool clamping device according to Claim 4, **characterized in that** the centring element (26) has at least one guide recess (28), through which the movement-arresting element (22) extends, at least partially.

6. Tool clamping device at least according to Claim 4, **characterized in that** the centring element (26) has a machining-tool receiving recess (30), which is arranged adjacently to a guide recess (28) of the centring element (26) for guiding the movement-arresting element (22).

7. Tool clamping device according to any one of the preceding claims, **characterized in that** the release element (18) is rotatably mounted.

8. Portable power tool having a tool clamping device according to any one of Claims 1 to 7.

## Revendications

1. Dispositif de serrage d'outil, notamment dispositif de serrage d'outil de sciage, pour une machine-outil portative, comprenant au moins une unité de serrage (14) destinée à un montage serré d'un outil d'usinage (16), qui comporte au moins un élément de libération (18) supporté mobile destiné à un transfert de l'unité de serrage (14) dans une position de desserrage, l'unité de serrage (14) possédant un élément ressort de libération (46) qui sollicite l'élément de libération (18) avec une force de ressort en direction d'une position de serrage de l'élément de libération (18), l'élément ressort de libération (46) étant réalisé sous la forme d'un ressort de torsion ou sous la forme d'un ressort à branches, possédant en outre au moins un élément de serrage (20) destiné à une génération d'une force de serrage agissant sur l'outil d'usinage (16), au moins dans un état de l'outil d'usinage (16) lié avec l'unité de serrage (14), et au moins un élément d'arrêt de mouvement (22) destiné à un arrêt d'au moins une possibilité de mouvement de l'unité de serrage (18) dans au moins un état, **caractérisé en ce que** l'élément de serrage (20) est réalisé sous la forme d'un élément ressort et **en ce que** l'élément d'arrêt de mouvement (22) est réalisé au moins partiellement sous la forme d'un prolongement transversal de l'élément de serrage (20).

2. Dispositif de serrage d'outil selon la revendication 1, **caractérisé en ce que** l'élément d'arrêt de mouvement (22) est réalisé d'un seul tenant avec l'élément de serrage (20).

3. Dispositif de serrage d'outil selon l'une des revendications précédentes, **caractérisé en ce que** l'élément de libération (18) possède au moins un élément de butée (24) qui coopère avec l'élément d'arrêt de mouvement (22) au moins dans un état.

4. Dispositif de serrage d'outil selon l'une des revendications précédentes, **caractérisé en ce que** l'unité de serrage (14) comporte au moins un élément de serrage (26) qui est conçu pour guider l'élément d'arrêt de mouvement (22).

5. Dispositif de serrage d'outil selon la revendication 4, **caractérisé en ce que** l'élément de serrage (26) possède au moins un évidement de guidage (28) à travers lequel s'étend au moins partiellement l'élément d'arrêt de mouvement (22).

6. Dispositif de serrage d'outil selon la revendication 4, **caractérisé en ce que** l'élément de centrage (26) possède un évidement d'accueil d'outil d'usinage (30), qui est disposé adjacent à un évidement de guidage (28) de l'élément de centrale (26) en vue d'un guidage de l'élément d'arrêt de mouvement (22).

7. Dispositif de serrage d'outil selon l'une des revendications précédentes, **caractérisé en ce que** l'élément de libération (18) est monté rotatif.

8. Machine-outil portative comprenant un dispositif de serrage d'outil selon l'une des revendications 1 à 7.
